# EUROPÄISCHE PATENTSCHRIFT

(11) **EP 3 271 231 B1**
(45) Veröffentlichungstag und Bekanntmachung des Hinweises auf die Patenterteilung: **26.12.2018**
(21) Anmeldenummer: 16702051.0
(22) Anmeldetag: 25.01.2016
(51) Int. Cl.: G01S 17/93, G01S 13/86, G01S 13/89, G01S 13/93, B60W 30/095, G08G 1/16

(54) **VERFAHREN UND VORRICHTUNG ZUM ÜBERWACHEN EINER VON EINEM FAHRZEUG ABZUFAHRENDEN SOLL-TRAJEKTORIE AUF KOLLISIONSFREIHEIT**
METHOD AND DEVICE FOR MONITORING A TARGET TRAJECTORY TO BE TRAVELLED BY A VEHICLE FOR ABSENCE OF COLLISIONS
PROCÉDÉ ET DISPOSITIF POUR SURVEILLER UNE TRAJECTOIRE DE CONSIGNE À PARCOURIR PAR UN VÉHICULE AU SUJET DE L'ABSENCE DE COLLISION

(30) Priorität: 20.03.2015 DE 102015205048
(43) Veröffentlichungstag der Anmeldung: 24.01.2018
(73) Patentinhaber: Robert Bosch GmbH, 70442 Stuttgart (DE)
(72) Erfinder: PINK, Oliver, 70469 Stuttgart (DE); NORDBRUCH, Stefan, 70806 Kornwestheim (DE); SCHROEDER, Christoph, 74385 Pleidelsheim (DE)
(86) Internationale Anmeldenummer: PCT/EP2016/051406
(87) Internationale Veröffentlichungsnummer: WO 2016/150590

(56) Entgegenhaltungen:
- EP-A1- 1 612 580
- EP-A1- 2 765 047
- DE-A1-102009 020 649
- DE-A1-102013 201 935

## Beschreibung

Die Erfindung betrifft ein Verfahren und eine Vorrichtung zum Überwachen einer von einem Fahrzeug abzufahrenden Soll-Trajektorie auf Kollisionsfreiheit. Die Erfindung betrifft ferner ein System zum Überwachen einer von einem Fahrzeug abzufahrenden Soll-Trajektorie auf Kollisionsfreiheit, ein Fahrzeug sowie ein Computerprogramm.

### Stand der Technik

Im hochautomatisierten Fahren ist eine Überwachung der vom Fahrzeug berechneten Soll-Trajektorie aus Sicherheitsgründen vor dem Befahren dieser unerlässlich. Grundsätzlich ist es üblicherweise so, dass die Soll-Trajektorie mit allen detektierten Objekten auf Kollisionen geprüft wird. Sollte eine Soll-Trajektorie zu einer Kollision führen, würde diese als nicht sinnvoll eingestuft werden und nicht befahren werden. Allerdings ist es im Allgemeinen nicht trivial, die tatsächliche Größe (insbesondere Breite und Länge) von Objekten zu bestimmen. Insbesondere Umfeldsensoren wie beispielsweise ein Radar-Sensor oder eine Mono-Kamera sind bestenfalls in der Lage zu erkennen, dass sich ein Objekt irgendwo im Sichtbereich befindet. Üblicherweise kann dieser Sensor nicht die genaue Kontur des Objekts bestimmen. Somit ist die Überprüfung von Trajektorien basierend auf detektierten Objekten nicht immer zielführend.

DE10 2009 020649 A1 offenbart ein Verfahren und eine Vorrichtung zur Kollisionsvermeidung für ein Fahrzeug durch Ausweichen vor einem Hindernis. Im Falle einer drohenden Kollision werden mehrere mögliche Ausweichtrajektorien bestimmt und den Ausweichtrajektorien Zeitabstandsgrenzen zugeordnet, die den Zeitabstand zum Hindernis repräsentieren, bei dem zur Kollisionsvermeidung ein Ausweichmanöver gemäss der jeweiligen Trajektorie spätestens eingeleitet werden muss. Dabei wird auch der Kollisionsfreiraum betrachtet.

### Offenbarung der Erfindung

Die der Erfindung zugrunde liegende Aufgabe kann daher darin gesehen werden, ein verbessertes Verfahren zum Überwachen einer von einem Fahrzeug abzufahrenden Soll-Trajektorie auf Kollisionsfreiheit bereitzustellen.

Die der Erfindung zugrunde liegende Aufgabe kann des Weiteren jeweils darin gesehen werden, eine entsprechende Vorrichtung, ein entsprechendes System, ein Fahrzeug sowie ein Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Überwachen einer von einem Fahrzeug abzufahrenden Soll-Trajektorie auf Kollisionsfreiheit bereitgestellt, umfassend die folgenden Schritte:
- Durchführen einer Freiraumessung eines Fahrzeugumfelds mittels einer Umfeldsensorik, um einen Freiraum im Fahrzeugumfeld zu bestimmen,
- Durchführen einer Objektmessung des Fahrzeugumfelds mittels der Umfeldsensorik, um Objekte im Fahrzeugumfeld zu bestimmen,
- Überprüfen der Soll-Trajektorie auf Kollisionsfreiheit jeweils basierend auf dem bestimmten Freiraum und auf den bestimmten Objekten,
- miteinander Vergleichen eines jeweiligen Ergebnisses der Überprüfungen auf Kollisionsfreiheit, wobei
- basierend auf dem Vergleich eine Kollisionsinformation bereitgestellt wird.

Gemäß einem weiteren Aspekt wird eine Vorrichtung zum Überwachen einer von einem Fahrzeug abzufahrenden Soll-Trajektorie auf Kollisionsfreiheit bereitgestellt, umfassend:
- eine Steuerungseinrichtung zum Steuern einer Umfeldsensorik, so dass die Umfeldsensorik eine Freiraummessung eines Fahrzeugumfelds und eine Objektmessung des Fahrzeugumfelds durchführt,
- einen Prozessor, der ausgebildet ist, basierend auf der Freiraummessung einen Freiraum im Fahrzeugumfeld zu bestimmen und basierend auf der Objektmessung Objekte im Fahrzeugumfeld zu bestimmen, wobei
- der Prozessor ferner ausgebildet ist, jeweils basierend auf dem bestimmten Freiraum und auf den bestimmten Objekten die Soll-Trajektorie auf Kollisionsfreiheit zu überprüfen, wobei
- der Prozessor ferner ausgebildet ist, ein jeweiliges Ergebnis der Überprüfungen auf Kollisionsfreiheit miteinander zu vergleichen und basierend auf dem Vergleich eine Kollisionsinformation bereitzustellen.

Gemäß einem weiteren Aspekt wird ein System zum Überwachen einer von einem Fahrzeug abzufahrenden Soll-Trajektorie auf Kollisionsfreiheit bereitgestellt, umfassend eine Umfeldsensorik und die erfindungsgemäße Vorrichtung.

Nach noch einem Aspekt wird ein Fahrzeug bereitgestellt, umfassend das erfindungsgemäße System.

Nach noch einem Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere den Gedanken, die vom Fahrzeug abzufahrende Soll-Trajektorie zweimal auf Kollisionsfreiheit zu überprüfen. Einmal basierend auf einer Freiraummessung und einmal basierend auf einer Objektmessung des Fahrzeugumfelds. Das heißt also, dass einmal der Freiraum im Fahrzeugumfeld bestimmt wird. Zum anderen werden Objekte im Fahrzeugumfeld bestimmt. Im Überprüfen der Soll-Trajektorie auf Kollisionsfreiheit wird dann insbesondere überprüft, ob die Soll-Trajektorie in dem Freiraum kollisionsfrei ist. Insbesondere wird beim Überprüfen der Soll-Trajektorie auf Kollisionsfreiheit überprüft, ob die Soll-Trajektorie mit den bestimmten Objekten kollidiert.

Somit werden in vorteilhafter Weise die Vorteile einer Kollisionsüberprüfung basierend auf einer Freiraummessung und auf einer Objektmessung miteinander kombiniert. Dadurch kann in vorteilhafter Weise eine Sicherheitsanforderung, die an eine hochautomatisierte Fahrfunktion gestellt wird, erfüllt werden. Es wird also eine verbesserte Kollisionsüberwachung ermöglicht, was in vorteilhafter Weise ein Kollisionsrisiko für das Fahrzeug verringert oder sogar vermeidet.

Ein Freiraum im Sinne der vorliegenden Erfindung bezeichnet insbesondere einen Raum oder eine Fläche, die frei von Objekten ist, also mittels des Fahrzeugs befahren werden kann.

Dadurch, dass die Kollisionsinformation basierend auf dem Vergleich bereitgestellt wird, wird insbesondere der technische Vorteil bewirkt, dass weitere Fahrzeugsysteme oder Fahrzeugkomponenten ihre Entscheidungen von dem Vergleich abhängig machen können. Somit können diese Fahrzeugsysteme oder Fahrzeugkomponenten adäquat auf das Ergebnis des Vergleichs reagieren.

Eine Kollisionsinformation im Sinne der vorliegenden Erfindung umfasst beispielsweise folgende Informationen: die abzufahrende Soll-Trajektorie ist kollisionsfrei, die abzufahrende Soll-Trajektorie ist nicht kollisionsfrei, beide Überprüfungen haben das gleiche Ergebnis geliefert oder ermittelt, beide Überprüfungen haben unterschiedliche Ergebnisse geliefert.

Nach einer Ausführungsform ist nur ein Vergleich der beiden einzelnen Prüfungen vorgesehen. Das heißt, dass nur die beiden einzelnen Prüfungen miteinander verglichen werden.

In einer Ausführungsform ist vorgesehen, dass für die Freiraumbestimmung die Objektmessung als Ausschlusskriterium dafür verwendet wird, ob an einem Ort im Fahrzeugumfeld ein Objekt ist oder nicht, so dass der Ort entsprechend als frei oder nicht frei gekennzeichnet wird. Dadurch wird insbesondere der technische Vorteil bewirkt, dass eine verbesserte Freiraumbestimmung ermöglicht ist. Es findet somit in vorteilhafter Weise eine doppelte Überprüfung für einen Ort im Fahrzeugumfeld statt, ob dieser Ort frei oder nicht ist: einmal mittels der Freiraummessung und einmal mittels der Objektmessung. Das heißt also insbesondere, dass ein Ort im Fahrzeugumfeld nur dann als frei gekennzeichnet wird, wenn die Objektmessung ergeben hat, dass sich an diesem Ort kein Objekt befindet. Umgekehrt wird der Ort als nicht frei gekennzeichnet, wenn die Objektmessung ergeben hat, dass sich an diesem Ort ein Objekt befindet. Entsprechend wird dann der Freiraum bestimmt.

Nach einer anderen Ausführungsform ist vorgesehen, dass für die Objektbestimmung die Freiraummessung als Ausschlusskriterium dafür verwendet wird, ob ein Ort im Fahrzeugumfeld frei oder nicht ist, so dass dem Ort entsprechend ein Objekt zugeordnet wird oder nicht. Dadurch wird insbesondere der technische Vorteil bewirkt, dass eine verbesserte und robustere Objektbestimmung ermöglicht ist. Denn es findet auch hier eine doppelte Überprüfung eines Ortes im Fahrzeugumfeld statt, ob sich an diesem Ort ein Objekt befindet oder nicht. Das heißt also insbesondere, dass im Rahmen der Objektbestimmung nur dann dem Ort ein Objekt zugeordnet wird, wenn die Freiraummessung nicht ergeben hat, dass der Raum an diesem Ort frei ist. Umgekehrt wird im Rahmen der Objektbestimmung diesem Ort kein Objekt zugeordnet, wenn die Freiraummessung ergeben hat, dass dieser Ort im Fahrzeugumfeld frei ist.

Nach einer anderen Ausführungsform ist vorgesehen, dass die Umfeldsensorik einen oder mehrere Umfeldsensoren umfasst. Umfeldsensoren sind beispielsweise folgende Sensoren: Radarsensor, Videosensor, insbesondere Videosensor oder Videosensoren einer Stereokamera, Lidarsensor oder Lasersensor. Die vorstehend genannten Umfeldsensoren erfassen sensorisch ein Fahrzeugumfeld und stellen dem sensorisch erfassten Fahrzeugumfeld entsprechende Sensordaten, auch Umfeldsensordaten genannt, bereit.

Nach einer Ausführungsform ist vorgesehen, dass die Umfeldsensorik mehrere Umfeldsensoren umfasst, die als Freiraumsensoren für die Durchführung der Freiraummessung einen Freiraum messen und/oder als Objektsensoren für die Durchführung der Objektmessung Objekte messen und jeweils entsprechend der Messung Freiraumsensordaten und/oder Objektsensordaten bereitstellen, wobei die Freiraumsensordaten fusioniert werden und/oder die Objektsensordaten fusioniert werden, so dass der bestimmte Freiraum auf den fusionierten Freiraumsensordaten und/oder die bestimmten Objekte auf den fusionierten Objektsensordaten basieren.

Dadurch wird insbesondere der technische Vorteil bewirkt, dass eine genauere und verbesserte Objektmessung und eine verbesserte und robustere Freiraummessung durchgeführt werden können. Insbesondere kann basierend auf den fusionierten Freiraumsensordaten und den fusionierten Objektsensordaten ein genaueres und verbessertes Umfeldmodell eines Umfelds des Fahrzeugs ermittelt werden, basierend auf welchem eine Kollisionsüberprüfung der Soll-Trajektorie durchgeführt wird.

In einer anderen Ausführungsform ist vorgesehen, dass das Durchführen der Objektmessung umfasst, dass Objektpositionen und/oder Objektkonturen bestimmt werden. Das heißt also insbesondere, dass im Rahmen der Objektmessung eine Objektposition und/oder eine Objektkontur der Objekte bestimmt werden. Dadurch kann in vorteilhafter Weise noch genauer und verbessert überprüft werden, ob die abzufahrende Soll-Trajektorie mit den bestimmten Objekten kollidiert oder nicht.

Nach einer anderen Ausführungsform ist vorgesehen, dass ein Ergebnis der Freiraummessung gitter- oder partikelbasiert repräsentiert wird, so dass der bestimmte Freiraum ein gitterbasierter oder ein partikelbasierter Freiraum ist. Das heißt also insbesondere, dass der Freiraum als ein Gitter repräsentiert werden kann. Das heißt also insbesondere, dass der Freiraum als Partikel repräsentiert oder beschrieben werden kann. Es ist mit beiden Ausführungsformen (Gitter- und partikelbasiert) eine ähnliche Leistungsfähigkeit erreichbar. Unterschiede liegen unter anderem in der benötigten Rechenzeit, was aber in der Regel nicht wesentlich ist.

Nach einer Ausführungsform ist die Umfeldsensorik vom Fahrzeug umfasst.

Funktionalitäten der Vorrichtung und des Systems ergeben sich analog aus den entsprechenden Funktionalitäten des Verfahrens. Das heißt also insbesondere, dass sich Vorrichtungs- und Systemmerkmale analog aus den Verfahrensmerkmalen ergeben und umgekehrt.

Nach einer Ausführungsform ist vorgesehen, dass die Vorrichtung zum Überwachen einer von einem Fahrzeug abzufahrenden Soll-Trajektorie auf Kollisionsfreiheit eingerichtet ist, das Verfahren zum Überwachen einer von einem Fahrzeug abzufahrenden Soll-Trajektorie auf Kollisionsfreiheit aus- oder durchzuführen.

Die Erfindung wird im Folgenden anhand von bevorzugten Ausführungsbeispielen näher erläutert. Hierbei zeigen
Fig. 1 ein Ablaufdiagramm eines Verfahrens zum Überwachen einer von einem Fahrzeug abzufahrenden Soll-Trajektorie auf Kollisionsfreiheit,
Fig. 2 eine Vorrichtung zum Überwachen einer von einem Fahrzeug abzufahrenden Soll-Trajektorie auf Kollisionsfreiheit,
Fig. 3 ein System zum Überwachen einer von einem Fahrzeug abzufahrenden Soll-Trajektorie auf Kollisionsfreiheit,
Fig. 4 ein Fahrzeug,
Fig. 5 ein Blockdiagramm eines weiteren Systems zum Überwachen einer von einem Fahrzeug abzufahrenden Soll-Trajektorie auf Kollisionsfreiheit,
Fig. 6 eine beispielhafte Kollisionsprüfung einer kollisionsbehafteten Soll-Trajektorie und
Fig. 7 eine objektbasierte Kollisionsüberprüfung.

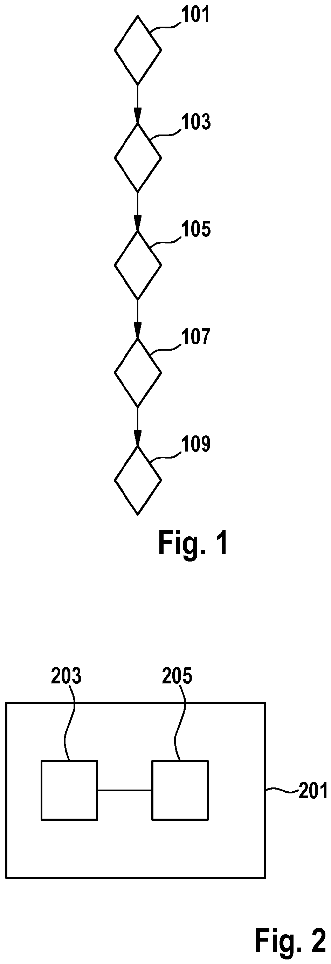

Fig. 1 zeigt ein Ablaufdiagramm eines Verfahrens zum Überwachen einer von einem Fahrzeug abzufahrenden Soll-Trajektorie auf Kollisionsfreiheit.

Gemäß einem Schritt 101 wird eine Freiraummessung eines Fahrzeugumfelds mittels einer Umfeldsensorik durchgeführt, um einen Freiraum im Fahrzeugumfeld zu bestimmen. Gemäß einem Schritt 103 wird eine Objektmessung des Fahrzeugumfelds mittels der Umfeldsensorik durchgeführt, um Objekte im Fahrzeugumfeld zu bestimmen. In einem Schritt 105 wird die Soll-Trajektorie auf Kollisionsfreiheit jeweils basierend auf dem bestimmten Freiraum und auf den bestimmten Objekten überprüft.

In einem Schritt 107 wird ein jeweiliges Ergebnis der Überprüfungen auf Kollisionsfreiheit gemäß dem Schritt 105 miteinander verglichen, wobei basierend auf dem Vergleich eine Kollisionsinformation gemäß einem Schritt 109 bereitgestellt wird.

Die Kollisionsinformation wird beispielsweise einer Ermittlungseinrichtung zum Ermitteln der abzufahrenden Soll-Trajektorie bereitgestellt. Dadurch weiß eine solche Ermittlungseinrichtung, dass ihre ermittelte Soll-Trajektorie möglicherweise kollisionsbehaftet ist, also nicht kollisionsfrei ist. Vorzugsweise ist vorgesehen, dass die Ermittlungseinrichtung die abzufahrende Soll-Trajektorie neu berechnet oder ermittelt.

Fig. 2 zeigt eine Vorrichtung 201 zum Überwachen einer von einem Fahrzeug abzufahrenden Soll-Trajektorie auf Kollisionsfreiheit.

Die Vorrichtung 201 umfasst eine Steuerungseinrichtung 203 zum Steuern einer Umfeldsensorik, so dass die Umfeldsensorik eine Freiraummessung eines Fahrzeugumfelds und eine Objektmessung des Fahrzeugumfelds durchführt. Die Vorrichtung 201 umfasst ferner einen Prozessor 205, der ausgebildet ist, basierend auf der Freiraummessung einen Freiraum im Fahrzeugumfeld zu bestimmen und basierend auf der Objektmessung Objekte im Fahrzeugumfeld zu bestimmen. Der Prozessor 205 ist ferner ausgebildet, jeweils basierend auf dem bestimmten Freiraum und auf den bestimmten Objekten die Soll-Trajektorie auf Kollisionsfreiheit zu überprüfen. Der Prozessor 205 ist ferner ausgebildet, ein jeweiliges Ergebnis der Überprüfungen auf Kollisionsfreiheit miteinander zu vergleichen und basierend auf dem Vergleich eine Kollisionsinformation bereitzustellen.

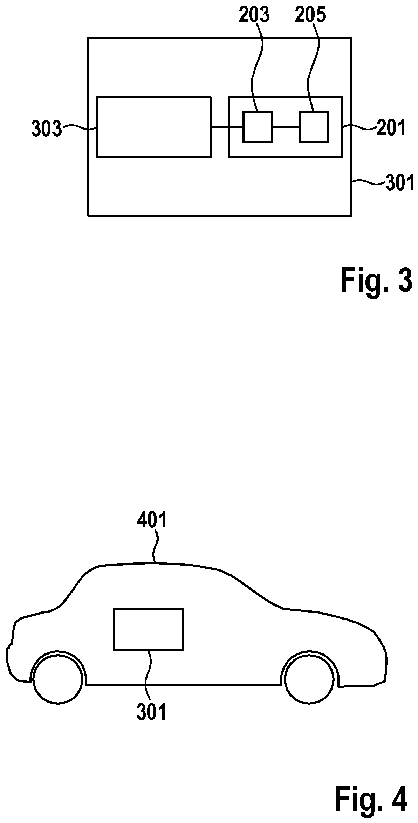

Fig. 3 zeigt ein System 301 zum Überwachen einer von einem Fahrzeug abzufahrenden Soll-Trajektorie auf Kollisionsfreiheit.

Das System 301 umfasst eine Umfeldsensorik 303 und die Vorrichtung 201 der Fig. 2.

Fig. 4 zeigt ein Fahrzeug 401, welches das System 301 gemäß Fig. 3 umfasst. Der Übersicht halber sind nicht sämtliche Merkmale des Systems 301 in Fig. 4 eingezeichnet.

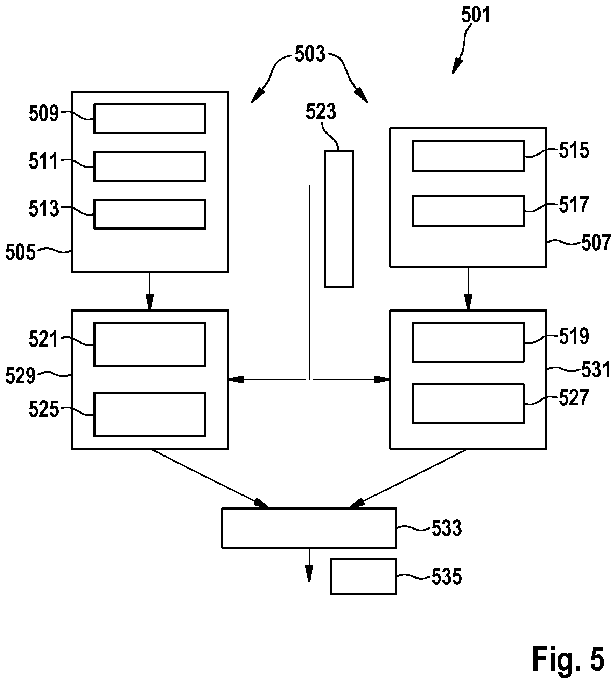

Fig. 5 zeigt ein Blockdiagramm eines weiteren Systems 501 zum Überwachen einer von einem Fahrzeug abzufahrenden Soll-Trajektorie auf Kollisionsfreiheit.

Das System 501 umfasst eine Umfeldsensorik 503, die zum einen eine Gruppe an Objektsensoren 505 und zum anderen eine Gruppe an Freiraumsensoren 507 aufweist. Zur Gruppe der Objektsensoren 505 gehören zum Beispiel ein Radarsensor 509, ein Videosensor 511 und ein Lidarsensor 513. Die Gruppe von Freiraumsensoren 507 umfasst zum Beispiel einen Videosensor 515 und einen Lidarsensor 517.

Die einzelnen Umfeldsensoren, also die Objektsensoren 505 und die Freiraumsensoren 507 erfassen sensorisch ein Fahrzeugumfeld und stellen entsprechende jeweilige Umfeldsensordaten bereit. Hierbei werden die einzelnen Umfeldsensoren mittels einer nicht gezeigten Steuerungseinrichtung gesteuert.

Die Freiraumsensordaten, also die Umfeldsensordaten des Videosensors 515 und des Lidarsensors 517, werden gemäß einem Schritt 519 fusioniert. Analog werden die Umfeldsensordaten, also die Objektsensordaten, der Objektsensoren 505, also dem Radarsensor 509, dem Videosensor 511 und dem Lidarsensor 513, miteinander fusioniert. Dies gemäß einem Schritt 521. Basierend auf den fusionierten Sensordaten wird dann ein Freiraum im Fahrzeugumfeld bestimmt respektive werden Objekte im Fahrzeugumfeld bestimmt. Basierend auf dem bestimmten Freiraum wird dann eine von dem Fahrzeug abzufahrende Soll-Trajektorie 523 auf Kollisionsfreiheit überprüft. Dies gemäß einem Schritt 525. Analog wird die Soll-Trajektorie 523 basierend auf den bestimmten Objekten im Fahrzeugumfeld auf Kollisionsfreiheit gemäß einem Schritt 527 überprüft.

Die Fusion 521 und die Kollisionsüberprüfung 525 sind Teil eines Verarbeitungsblocks 529. Die Fusion 519 und die Kollisionsüberprüfung 527 sind Teil eines Verarbeitungsblocks 531. Die beiden Verarbeitungsblöcke 529 und 531 repräsentieren zum Beispiel jeweils einen Prozessor oder eine Verarbeitungseinrichtung, der die vorstehenden genannten Schritte durchführt, wobei diese Schritte beispielsweise auch auf einem gemeinsamen Prozessor oder einer gemeinsamen Verarbeitungseinrichtung durchgeführt werden können.
Ein jeweiliges Ergebnis der beiden Kollisionsüberprüfungen wird miteinander verglichen gemäß einem Schritt 533, um basierend auf dem Vergleich eine Kollisionsinformation 535 bereitzustellen. Das Fusionieren, das Überprüfen auf Kollisionsfreiheit, das Vergleichen und das Bereitstellen der Kollisionsinformation werden mittels eines hier nicht dargestellten Prozessors durchgeführt.

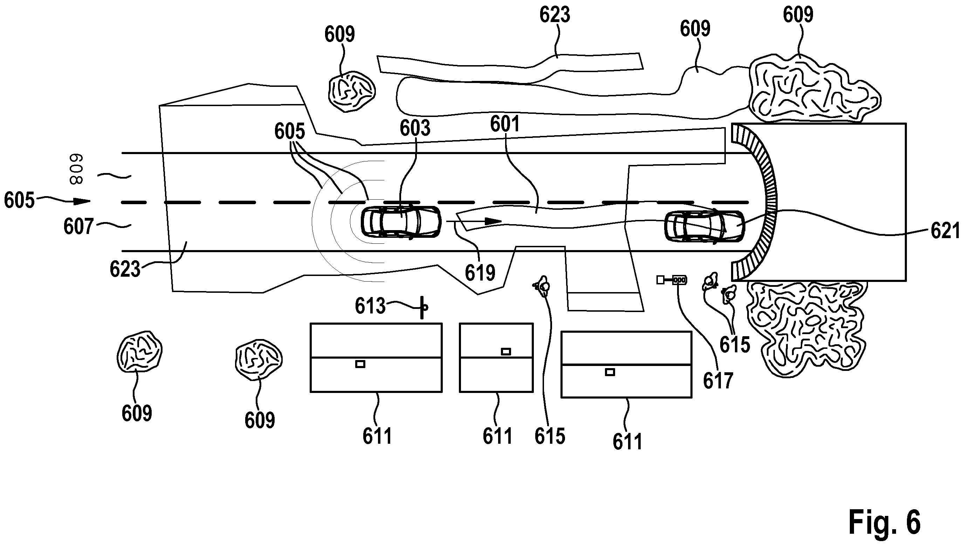

Fig. 6 zeigt eine beispielhafte Prüfung einer kollisionsbehafteten Soll-Trajektorie 601.
Gezeigt ist ein Fahrzeug 603, welches mittels einer hier nicht gezeigten Umfeldsensorik sein Umfeld sensorisch erfassen kann. Um das sensorische Erfassen des Fahrzeugumfelds symbolisch darzustellen, sind halbkreisförmige grafische Elemente mit dem Bezugszeichen 605 eingezeichnet.
Das Fahrzeug 603 fährt auf einer Straße 605 umfassend zwei Fahrspuren 607 und 608. Das Fahrzeug 603 fährt auf der Fahrspur 607.
Im Umfeld des Fahrzeugs 603 sind mehrere Objekte angeordnet. Beispielsweise sind Büsche oder Pflanzen im Umfeld des Fahrzeugs 603 angeordnet. Diese sind mit dem Bezugszeichen 609 versehen. Beispielsweise sind im Umfeld des Fahrzeugs 603 Gebäude 611 angeordnet. Beispielsweise ist im Umfeld des Fahrzeugs 603 ein Verkehrsschild 613 angeordnet.
Im Fahrzeugumfeld befinden sich ferner Personen 615 sowie eine Lichtsignalanlage 617. Eine Fahrtrichtung des Fahrzeugs ist symbolisch mittels eines Pfeils mit dem Bezugszeichen 619 gekennzeichnet.

In Fahrtrichtung 619 voraus befindet sich ein weiteres Fahrzeug 621. Die Soll-Trajektorie 601 ist insofern kollisionsbehaftet, als dass sie bei einem Abfahren derselben zu einer Kollision des Fahrzeugs 603 mit dem weiteren Fahrzeug 621 führen würde.

Das sensorische Erfassen des Fahrzeugumfelds umfasst insbesondere eine Freiraummessung und eine Objektmessung. Die Soll-Trajektorie 601 wird basierend auf der Objektmessung und auf der Freiraummessung auf Kollisionsfreiheit überprüft. Hierbei zeigt Fig. 6 diese Überprüfung basierend auf der Freiraummessung.

Eine solche Überprüfung ist insbesondere von einer Repräsentation der Umfeldsensordaten abhängig, die mittels der Freiraumsensoren bereitgestellt wurden. Sofern nach einer Ausführungsform die Repräsentation der Freiraumdaten eine gitterbasierte ist, so wird nach einer Ausführungsform ein beispielhafter Test oder eine beispielhafte Überprüfung der Soll-Trajektorie 601 auf Kollisionsfreiheit wie folgt durchgeführt:
Im ersten Schritt wird beispielsweise der Konfigurationsraum 623 berechnet (dieser kann beispielsweise berechnet werden, indem im Wesentlichen die Freifläche mit einem Modell (bezüglich der Größe und Orientierung) des Fahrzeugs gefaltet wird. Vorzugsweise wird dies für alle möglichen Orientierungen des Fahrzeugs durchgeführt und resultiert in einem mehrdimensionalen Konfigurationsraum 623. Der Konfigurationsraum 623 ist der n-dimensionale Hyperraum, der durch die unabhängigen Freiheitsgrade eines Systems gebildet wird. Jede tatsächliche Bewegung stellt eine Trajektorie im Konfigurationsraum 623 dar. Im Unterschied zum Phasenraum bildet der Konfigurationsraum 623 nicht den Impuls der einzelnen Elemente ab, weshalb nur die aktuelle Konfiguration respektive der aktuelle Zustand des Systems dargestellt wird, während die weitere Bewegung der einzelnen Elemente nicht abgeleitet werden kann. Der Konfigurationsraum 623 ist also der Freiraum oder beschreibt eine freie Fläche, die vom Fahrzeug 603 befahren werden kann

Es entsteht ein mehrere Zellen aufweisendes Gitter mit angemessener Skalierung und Dimensionierung, in dem die Freiheit respektive Befahrbarkeit einer Zelle dadurch gekennzeichnet ist, dass die Zelle vollständig im freien Konfigurationsraum 623 liegt. Das Gitter ist also insbesondere eine projizierte Repräsentation des Konfigurationsraums. Angemessen in diesem Zusammenhang bedeutet insbesondere angemessen in Abhängigkeit von der Reichweite und/oder Anwendung. Beispielsweise ist für einen Autobahnpiloten eine Gittergröße oder Zellengröße von 20 cm bis 30 cm ausreichend, für einen urbanen Piloten muss diese jedoch eher im Berich von 10 cm liegen. Das heißt, dass angemessen heißt, dass die Zellengröße oder Gittergröße angepasst, insbesondere optimal angepasst, an die konkret vorliegende Verkehrssituation ist. Die Gittergröße oder Zellengröße wird beispielsweise in Abhängigkeit von einem Streckentyp (Landstraße, Autobahn, Stadtstraße) gewählt.

Das Gitter ist somit ein Raum, der alle kollisionsfreien Trajektorien des Fahrzeugs 603 beschreibt, solange diese sich innerhalb des Gitters befinden. Das heißt, solange sich eine Trajektorie innerhalb des Gitters oder innerhalb des Konfigurationsraums 623 befindet, ist diese kollisionsfrei.

Die Trajektorie 603 wird nun in diesem Raum geprüft, indem für alle Zellen, die von der Trajektorie durchkreuzt werden, geprüft wird, ob diese frei bzw. befahrbar sind. Die Prüfung der Trajektorie 603 in diesem Raum muss daher durchgeführt werden, da eine Zelle frei oder befahrbar sein kann (auf dem Konfigurationsraum extrahiert), deshalb muss die Trajektorie in diesem Kontext geprüft werden.

Eine Trajektorie von einem Start- zu einem Zielpunkt bezeichnet nach einer Ausführungsform eine Folge von benachbarten Punkten im Konfigurationsraum 623. Hier bezieht sich diese Definition der Trajektorie auf die Kollisionsprüfung mit dynamischen Objekten, also Objekten, die sich bewegen oder die sich zumindest bewegen können, wobei diese Kollisionsprüfung insbesondere nach der Trajektoriengenerierung oder Trajektorienermittlung mit Hilfe des Konfigurationsraums folgt,
Für die objektbasierten Kollisionsüberprüfung wird beispielsweise ein kreisbasierter Ansatz verwendet. Hier wird das eigene Fahrzeug 603 sowie alle weiteren sich in der Szene befindlichen Fahrzeuge (zum Beispiel das weitere Fahrzeug 621) durch Kreise approximiert und dann eine Überlappung der Kreise für alle Trajektorienzeitpunkte berechnet. Sollte es einen Zeitpunkt geben, an dem sich die Approximation des Ego-Fahrzeugs (Fahrzeug 603) mit der Approximation eines anderen Verkehrsteilnehmers (zum Beispiel das weitere Fahrzeug 621) deckt, kann von einer Kollision ausgegangen werden.

Im letzten Schritt wird ein Vergleich der Ergebnisse beider Kollisionsprüfungen durchgeführt. Sollte eine der beiden Prüfungen ein negatives Ergebnis im Sinne einer erkannten Kollision ergeben, wird dieses dem Trajektorien generierenden System (zum Beispiel der Ermittlungseinrichtung) angezeigt, es wird eine Kollisionsinformation bereitgestellt.

Die Erfindung wurde für das hochautomatisierte und autonome Fahren entwickelt, wo es sinnvollerweise bei der Überwachung des Systems eingesetzt werden kann. Weiterhin ergeben sich zahlreiche weitere Aufgabenfelder, in denen ähnliche Aufgaben, Anforderungen und Lösungskonzepte vonnöten sind. Dies ist insbesondere in der Automatisierungstechnik und Robotik der Fall. Das heißt, dass die Erfindung, wie sie im Zusammenhang mit Fahrzeugen beschrieben wurde, nach weiteren Ausführungsformen in der Automatisierungstechnik und/oder der Robotik eingesetzt oder verwendet werden kann respektive wird.

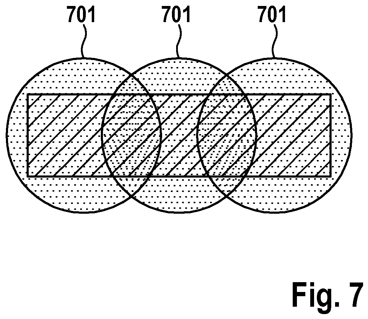

Fig. 7 zeigt einen objektbasierten Kollisionscheck oder eine objektbasierte Kollisionsüberprüfung. Hierbei wird, wie bereits vorstehend erläutert, das Fahrzeug 603 durch einen Kreis 701 approximiert, wobei dann ein Überlappungszeitpunkt der Kreise 701 für alle Trajektorienzeitpunkte berechnet wird. Ebenfalls werden alle weiteren Fahrzeuge, zum Beispiel das Fahrzeug 621, durch solche Kreise approximiert. Insbesondere werden alle Objekte, zum Beispiel Büsche, Gebäude und Personen, durch Kreise approximiert. Das bewirkt in vorteilhafter Weise, dass die Kollisionsprüfung algorithmisch recheneffizient umgesetzt werden kann.

Zusammenfassend stellt die Erfindung ein effizientes Konzept bereit, mittels dessen die vom Fahrzeug abzufahrende Soll-Trajektorie, die insbesondere vom Fahrzeug selbst berechnet werden kann, auf Kollisionsfreiheit geprüft oder überprüft werden kann. Ein wesentlicher Vorteil der Erfindung ist beispielsweise eine modellunabhängige und zuverlässige Überwachung von Soll-Trajektorien, indem die Soll-Trajektorie, die insbesondere vom Fahrzeug angefordert sein kann, in zwei unabhängigen Überprüfungsschritten, die insbesondere in zwei unabhängigen Verarbeitungseinrichtungen oder Systemen oder Prozessoren durchgeführt werden können, einerseits mit Freiraummessungen und andererseits mit Objektmessungen auf Kollisionsfreiheit geprüft wird.

Hier ist anzumerken, dass es üblicherweise nicht von Interesse ist, was genau sich im nicht freien (nicht befahrbaren) Raum befindet. Wichtig für die Kollisionsprüfung der Soll-Trajektorie ist insbesondere ausschließlich, dass diese in einem freien (befahrbaren) Raum geplant wurde.

Die Erfindung basiert auf einer Kombination von zwei Überprüfungsverfahren: einmal basierend auf einer Objektmessung und einmal basierend auf einer Freiraummessung. Selbst wenn jedes dieser Verfahren für sich noch nicht die nötige Sicherheit bei speziellen Anwendungsszenarien liefern sollte, so sind beide Verfahren kombiniert sehr wohl in vorteilhafter Weise in der Lage, die Sicherheitsanforderungen von hochautomatisierten Fahrfunktionen zu erfüllen.

Das erfindungsgemäße Konzept basiert auf einer freiraumbasierten Kollisionsprüfung unter Zuhilfenahme entsprechender Freiraumsensoren sowie auf einer objektbasierten Kollisionsprüfung unter Zuhilfenahme entsprechender Objektsensoren.

Freiraummessungen werden beispielsweise von einem einzelnen Sensor, wie einem Lidar oder einem hochauflösenden Radar oder von einer Kombination von mehreren Umfeldsensoren wie beispielsweise einem Radar-Sensor sowie einer Stereo-Videokamera durchgeführt. Vorzugsweise ist also mindestens ein Sensor vorgesehen, der aktiv Freiraum messen kann. In einer Ausführungsform können vorhandene Objektmessungen von anderen Sensoren als Ausschlusskriterium in die Freiraumbestimmung einbezogen werden. Die Freiraummessung kann beispielsweise gitter- oder partikelbasiert repräsentiert werden. Es ist hierbei insbesondere nicht besonders interessant, dass der Freiraum, der tatsächlich existiert, genau und vollständig vermessen wird. Es muss nur sichergestellt werden, dass an den Stellen, an denen der Sensor Freiraum misst, auch tatsächlich Freiraum ist. Aus Sicht der Trajektorienprüfung ist es nur wichtig, dass die Freiraummessung keine falsch positiven liefert. Die Rate der falschen Negativen ist unerheblich und beeinflusst nicht die Sicherheit, sondern die Verfügbarkeit des überwachten Gesamtsystems.

Objektmessungen können beispielsweise von einem Radar, einem Lidar, einer Videokamera oder einer beliebigen Kombination dieser Sensoren geliefert werden. Vorzugsweise ist mindestens ein Sensor vorgesehen, der Objekte messen kann. In einer Ausführungsform können vorhandene Freiraummessungen von anderen Sensoren als Ausschlusskriterium in die Objektmessung einbezogen werden. Bei der objektbasierten Prüfung ist es insbesondere entscheidend, dass vorzugsweise möglichst alle Objekte detektiert und in der Position und Kontur vermessen werden.

Die vom Fahrzeug abzufahrende Soll-Trajektorie, also insbesondere die vom Fahrzeug angeforderte Soll-Trajektorie, wird nun basierend auf beiden Messungen auf Kollisionsfreiheit geprüft.

## Patentansprüche

1. Verfahren zum Überwachen einer von einem Fahrzeug (401, 603) abzufahrenden Soll-Trajektorie (523, 601) auf Kollisionsfreiheit, umfassend die folgenden Schritte:
- Durchführen (101) einer Freiraumessung eines Fahrzeugumfelds mittels einer Umfeldsensorik (303, 503), um einen Freiraum (623) im Fahrzeugumfeld zu bestimmen,
- Durchführen (103) einer Objektmessung des Fahrzeugumfelds mittels der Umfeldsensorik (303, 503), um Objekte (609, 611, 613, 615, 617, 621) im Fahrzeugumfeld zu bestimmen,
**gekennzeichnet durch**
- Überprüfen (105) der Soll-Trajektorie (523, 601) auf Kollisionsfreiheit jeweils basierend auf dem bestimmten Freiraum (623) und auf den bestimmten Objekten (609, 611, 613, 615, 617, 621),
- miteinander Vergleichen (107) eines jeweiligen Ergebnisses der Überprüfungen auf Kollisionsfreiheit, wobei
- basierend auf dem Vergleich eine Kollisionsinformation bereitgestellt (109) wird.

2. Verfahren nach Anspruch 1, wobei für die Freiraumbestimmung die Objektmessung als Ausschlusskriterium dafür verwendet wird, ob an einem Ort im Fahrzeugumfeld ein Objekt (609, 611, 613, 615, 617, 621) ist oder nicht, so dass der Ort entsprechend als frei oder nicht frei gekennzeichnet wird.

3. Verfahren nach Anspruch 1 oder 2, wobei für die Objektbestimmung die Freiraummessung als Ausschlusskriterium dafür verwendet wird, ob ein Ort im Fahrzeugumfeld frei oder nicht ist, so dass dem Ort entsprechend ein Objekt (609, 611, 613, 615, 617, 621) zugeordnet wird oder nicht.

4. Verfahren nach einem der vorherigen Ansprüche, wobei die Umfeldsensorik (303, 503) mehrere Umfeldsensoren umfasst, die als Freiraumsensoren (505) für die Durchführung der Freiraummessung einen Freiraum (623) messen und/oder als Objektsensoren (507) für die Durchführung der Objektmessung Objekte (609, 611, 613, 615, 617, 621) messen und jeweils entsprechend der Messung Freiraumsensordaten und/oder Objektsensordaten bereitstellen, wobei die Freiraumsensordaten fusioniert werden und/oder die Objektsensordaten fusioniert werden, so dass der bestimmte Freiraum (623) auf den fusionierten Freiraumsensordaten und/oder die bestimmten Objekte (609, 611, 613, 615, 617, 621) auf den fusionierten Objektsensordaten basieren.

5. Verfahren nach einem der vorherigen Ansprüche, wobei das Durchführen der Objektmessung umfasst, dass Objektpositionen und/oder Objektkonturen bestimmt werden.

6. Verfahren nach einem der vorherigen Ansprüche, wobei ein Ergebnis der Freiraummessung gitter- oder partikelbasiert repräsentiert wird, so dass der bestimmte Freiraum (623) ein gitterbasierter oder ein partikelbasierter Freiraum ist.

7. Vorrichtung (201) zum Überwachen einer von einem Fahrzeug (401, 603) abzufahrenden Soll-Trajektorie (523, 601) auf Kollisionsfreiheit, umfassend:
- eine Steuerungseinrichtung (203) zum Steuern einer Umfeldsensorik, so dass die Umfeldsensorik (303, 503) eine Freiraummessung eines Fahrzeugumfelds und eine Objektmessung des Fahrzeugumfelds durchführt,
- einen Prozessor (205), der ausgebildet ist, basierend auf der Freiraummessung einen Freiraum (623) im Fahrzeugumfeld zu bestimmen und basierend auf der Objektmessung Objekte (609, 611, 613, 615, 617, 621) im Fahrzeugumfeld zu bestimmen,
**dadurch gekennzeichnet, dass**
- der Prozessor (205) ferner ausgebildet ist, jeweils basierend auf dem bestimmten Freiraum (623) und auf den bestimmten Objekten (609, 611, 613, 615, 617, 621) die Soll-Trajektorie (523, 601) auf Kollisionsfreiheit zu überprüfen, wobei
- der Prozessor (205) ferner ausgebildet ist, ein jeweiliges Ergebnis der Überprüfungen auf Kollisionsfreiheit miteinander zu vergleichen und basierend auf dem Vergleich eine Kollisionsinformation bereitzustellen.

8. System (301, 501) zum Überwachen einer von einem Fahrzeug (401, 603) abzufahrenden Soll-Trajektorie (523, 601) auf Kollisionsfreiheit, umfassend eine Umfeldsensorik (303, 503) und die Vorrichtung nach Anspruch 7.

9. Fahrzeug (401, 603), umfassend das System nach Anspruch 8.

10. Computerprogramm, umfassend Programmcode zur Durchführung des Verfahrens nach einem der Ansprüche 1 bis 6, wenn das Computerprogramm auf einem Computer ausgeführt wird.

## Claims

1. Method for monitoring a target trajectory (523, 601) to be travelled by a vehicle (401, 603) for the absence of collisions, comprising the following steps of:
- carrying out (101) a clearance measurement of a vehicle environment by means of an environment sensor system (303, 503) in order to determine a clearance (623) in the vehicle environment,
- carrying out (103) an object measurement of the vehicle environment by means of the environment sensor system (303, 503) in order to determine objects (609, 611, 613, 615, 617, 621) in the vehicle environment,
**characterized by**
- checking (105) the target trajectory (523, 601) for the absence of collisions based in each case on the determined clearance (623) and the determined objects (609, 611, 613, 615, 617, 621),
- comparing (107) a respective result of the checks for the absence of collisions, wherein
- an item of collision information is provided (109) on the basis of the comparison.

2. Method according to Claim 1, wherein, in order to determine the clearance, the object measurement is used as an exclusion criterion for whether or not there is an object (609, 611, 613, 615, 617, 621) at a location in the vehicle environment, with the result that the location is accordingly marked as clear or not clear.

3. Method according to Claim 1 or 2, wherein, in order to determine the objects, the clearance measurement is used as an exclusion criterion for whether or not a location in the vehicle environment is clear, with the result that an object (609, 611, 613, 615, 617, 621) is accordingly assigned or is not assigned to the location.

4. Method according to one of the preceding claims, wherein the environment sensor system (303, 503) comprises a plurality of environment sensors which, as clearance sensors (505), measure a clearance (623) in order to carry out the clearance measurement and/or, as object sensors (507), measure objects (609, 611, 613, 615, 617, 621) in order to carry out the object measurement and each provide clearance sensor data and/or object sensor data according to the measurement, wherein the clearance sensor data are merged and/or the object sensor data are merged, with the result that the determined clearance (623) is based on the merged clearance sensor data and/or the determined objects (609, 611, 613, 615, 617, 621) are based on the merged object sensor data.

5. Method according to one of the preceding claims, wherein the practice of carrying out the object measurement comprises determining object positions and/or object contours.

6. Method according to one of the preceding claims, wherein a result of the clearance measurement is represented in a grid-based or particle-based manner, with the result that the determined clearance (623) is a grid-based or a particle-based clearance.

7. Apparatus (201) for monitoring a target trajectory (523, 601) to be travelled by a vehicle (401, 603) for the absence of collisions, comprising:
- a control device (203) for controlling an environment sensor system, with the result that the environment sensor system (303, 503) carries out a clearance measurement of a vehicle environment and an object measurement of the vehicle environment,
- a processor (205) which is designed to determine a clearance (623) in the vehicle environment on the basis of the clearance measurement and to determine objects (609, 611, 613, 615, 617, 621) in the vehicle environment on the basis of the object measurement,
**characterized in that**
- the processor (205) is also designed to check the target trajectory (523, 601) for the absence of collisions in each case on the basis of the determined clearance (623) and the determined objects (609, 611, 613, 615, 617, 621), wherein
- the processor (205) is also designed to compare a respective result of the checks for the absence of collisions and to provide an item of collision information on the basis of the comparison.

8. System (301, 501) for monitoring a target trajectory (523, 601) to be travelled by a vehicle (401, 603) for the absence of collisions, comprising an environment sensor system (303, 503) and the apparatus according to Claim 7.

9. Vehicle (401, 603) comprising the system according to Claim 8.

10. Computer program comprising program code for carrying out the method according to one of Claims 1 to 6 when the computer program is executed on a computer.

## Revendications

1. Procédé de surveillance de l'absence de collision sur une trajectoire voulue (523, 601) à parcourir par un véhicule (401, 603), comprenant les étapes suivantes :
- réalisation (101) d'une mesure d'espace libre d'un environnement de véhicule au moyen d'un système de détection d'environnement (303, 503) afin de définir un espace libre (623) dans l'environnement du véhicule,
- réalisation (103) d'une mesure d'objet de l'environnement du véhicule au moyen du système de détection d'environnement (303, 503) afin de définir des objets (609, 611, 613, 615, 617, 621) dans l'environnement du véhicule,
**caractérisé par**
- contrôle (105) de l'absence de collision sur la trajectoire voulue (523, 601) en se basant respectivement sur l'espace libre (623) défini et sur les objets (609, 611, 613, 615, 617, 621) définis,
- comparaison (107) réciproque d'un résultat respectif des contrôles de l'absence de collision,
- une information de collision étant fournie (109) en se basant sur la comparaison.

2. Procédé selon la revendication 1, la mesure d'objet étant utilisée comme critère d'exclusion pour la définition d'espace libre en vue de déterminer si un objet (609, 611, 613, 615, 617, 621) est présent ou non en un endroit dans l'environnement du véhicule, de sorte que l'endroit est identifié en conséquence comme étant libre ou non libre.

3. Procédé selon la revendication 1 ou 2, la mesure d'espace libre étant utilisée comme critère d'exclusion pour la définition d'objet en vue de déterminer si un endroit dans l'environnement du véhicule est libre ou non, de sorte qu'un objet (609, 611, 613, 615, 617, 621) est associé ou non en conséquence à l'endroit.

4. Procédé selon l'une des revendications précédentes, le système de détection d'environnement (303, 503) comportant plusieurs détecteurs d'environnement qui, en tant que détecteurs d'espace libre (505), mesurent un espace libre (623) pour la réalisation de la mesure d'espace libre et/ou, en tant que détecteurs d'objet (507) mesurent des objets (609, 611, 613, 615, 617, 621) pour la réalisation de la mesure d'objet et fournissent respectivement des données de détecteur d'espace libre et/ou des données de détecteur d'objet conformément à la mesure,
les données de détecteur d'espace libre étant fusionnées et/ou les données de détecteur d'objet étant fusionnées, de sorte que l'espace libre (623) défini se base sur les données de détecteur d'espace libre fusionnées et/ou les objets (609, 611, 613, 615, 617, 621) définis se basent sur les données de détecteur d'objet fusionnées.

5. Procédé selon l'une des revendications précédentes, la réalisation de la mesure d'objet comprenant la définition de positions d'objets et/ou de contours d'objets.

6. Procédé selon l'une des revendications précédentes, un résultat de la mesure d'espace libre étant représenté sous la forme d'une grille ou de particules, de sorte que l'espace libre (623) défini est un espace libre basé sur une grille ou basé sur des particules.

7. Arrangement (201) de surveillance de l'absence de collision sur une trajectoire voulue (523, 601) à parcourir par un véhicule (401, 603), comprenant :
- un dispositif de commande (203) destiné à commander un système de détection d'environnement de sorte que le système de détection d'environnement (303, 503) réalise une mesure d'espace libre d'un environnement de véhicule et une mesure d'objet de l'environnement du véhicule,
- un processeur (205) qui est configuré pour définir un espace libre (623) dans l'environnement du véhicule en se basant sur la mesure d'espace libre et des objets (609, 611, 613, 615, 617, 621) dans l'environnement du véhicule en se basant sur la mesure d'objet,
**caractérisé en ce que**
- le processeur (205) est en outre configuré pour contrôler l'absence de collision sur la trajectoire voulue (523, 601) en se basant respectivement sur l'espace libre (623) défini et sur les objets (609, 611, 613, 615, 617, 621) définis,
- le processeur (205) étant en outre configuré pour comparer réciproquement un résultat respectif des contrôles de l'absence de collision et fournir une information de collision en se basant sur la comparaison.

8. Système (301, 501) de surveillance de l'absence de collision sur une trajectoire voulue (523, 601) à parrcourir par un véhicule (401, 603), comprenant un système de détection d'environnement (303, 503) et l'arrangement selon la revendication 7.

9. Véhicule (401, 603), comprenant le système selon la revendication 8.

10. Programme informatique, comprenant un code de programme destiné à mettre en oeuvre le procédé selon l'une des revendications 1 à 6 lorsque le programme informatique est exécuté sur un ordinateur.
